# EUROPÄISCHE PATENTANMELDUNG

(11) **EP 2 211 064 A1**
(43) Veröffentlichungstag der Anmeldung: **28.07.2010**
(21) Anmeldenummer: 09001084.4
(22) Anmeldetag: 27.01.2009
(51) Int. Cl.: F16B 39/284, F16B 39/30

(54) **Selbstsichernde Mutter**

(71) Anmelder: Siemens Aktiengesellschaft, 80333 München (DE)
(72) Erfinder: Thiemann, Thomas, Dr., 45659 Recklinghausen (DE)

(57) **Zusammenfassung**

Die Erfindung betrifft eine Mutter (1) mit einem zumindest einem Gewindegang (3) aufweisenden Innengewinde (2) , wobei der Gewindegang (3) spiralförmig um eine Drehachse (4) der Mutter (1) ausgebildet ist und in Umfangsrichtung (5) nacheinander angeordnete Schlitze (6) aufweist, wobei die Schlitze (6) derart ausgebildet sind, dass zwischen den Schlitzen (6) ein Innengewindezahn (7) ausgebildet ist, um ein unbeabsichtigtes Lösen zu vermeiden.

## Beschreibung

Die Erfindung betrifft eine Mutter mit einem zumindest einen Gewindegang aufweisenden Innengewinde, wobei der Gewindegang spiralförmig um eine Drehachse der Mutter ausgebildet ist und in Umfangsrichtung nacheinander angeordnete Schlitze aufweist.

Muttern werden für Schraubverbindungen verwendet und in vielen technischen Gebieten umfangreich eingesetzt. Unter einer Mutter wird ein mit einem Innengewinde versehenes und aufschraubbares Gegenstück zu einer Schraube bezeichnet, wobei auch die Bezeichnung Schraubenmutter verwendet wird.

Es sind verschiedene Arten von Muttern bekannt. Mit Hilfe einer Mutter und einer komplementär dazu ausgebildeten Vaterschraube ist es möglich, eine lösbare Verbindung zwischen zwei Bauteilen herzustellen. Dazu werden die Mutter und die Schraube derart gegeneinander verdreht, dass die Mutter in Folge der spiralförmigen Gewindegänge eine Kraft auf die Bauteile ausübt.

Allerdings besteht ein Problem darin, dass die Mutter sich unbeabsichtigt lösen kann, was dazu führt, dass die Bauteile nicht mehr kraftschlüssig miteinander verbunden sind. Insbesondere sind bei vibrationsgefährdeten Anwendungen Verschraubungen mit Schrauben und Muttern durch wirkungsvolle Maßnahmen gegen unbeabsichtigtes Lösen zu sichern. Ebenso ist bei thermisch wechselnden Bedingungen die Gefahr eines unbeabsichtigten Lösens einer Schraubverbindung gegeben.

Die Erfindung beschäftigt sich mit dem Problem, eine Mutter gegen unbeabsichtigtes Lösen zu sichern. Es sind im Grunde genommen verschiedene Verfahren bekannt, um ein unbeabsichtigtes Lösen zu vermeiden. Grundsätzlich können die bekannten Verfahren in zwei Kategorien unterteilt werden. Nach der einen Kategorie wird das unbeabsichtigte Lösen der Mutter mit zusätzlichen Komponenten sichergestellt. Das geschieht beispielsweise durch Einbringen mindestens eines weiteren Elementes. Ein derartiges Element kann beispielweise eine Kronenmutter mit Splint, "eine Nordlock"-Scheibe, ein umgebogenes Sicherungsblech, ein Klebstoff, wie z.B. "LOCTITE" ^{®} sein. Allerdings ist dadurch der Montageaufwand erhöht gegenüber einer einfachen Schraubenmutterverbindung. Darüber hinaus sind für die Muttern und Schrauben oft aufwändige Fertigungsmaßnahmen erforderlich. Beispielsweise müssen Bolzen mit Radialbohrungen für die Sicherung mit einem Splint ausgebildet werden. Selbst die Verwendung von Klebemitteln ist problembehaftet, da die dauerhafte Wirksamkeit von Klebemitteln bei langer Betriebsdauer und ungünstigen Betriebsbedingungen, wie sie beispielsweise bei wechselnden Temperaturen vorkommen, fraglich ist.

In der zweiten Kategorie werden selbstsichernde Muttern verwendet. Solche selbstsichernde Muttern umfassen oftmals eine integrierte Sicherung. Beispielsweise ist es bekannt, selbstsichernde Muttern mit Kunststoffeinsätzen zu verwenden, die durch die Quetschung eine erhöhte Reibkraft gegen Lösen erzeugen. Allerdings ist auch hier wiederum die Dauerbeständigkeit gegenüber Betriebsbedingungen, bei denen hohe Temperaturen auftreten problembehaftet. Darüber hinaus ist es bekannt, definiert vorverformte Muttern einzusetzen, die insgesamt zu einer erhöhten Reibkraft führen. Nachteilig bei diesen Lösungen ist allerdings, dass bei der Verschraubung der Mutter ein überlagertes, nicht genau definiertes Reibmoment erzeugt wird, so dass eine genau definierte Vorspannkraft nicht sicher einzustellen ist. Das kann dazu führen, dass bei thermisch beanspruchten Anwendungen ein Werkstoffkriechen zu einer Reduzierung des Losdrehmomentes führt.

Wünschenswert wäre eine einfache Lösung, um das unbeabsichtigte Lösen einer Mutter zu vermeiden.

An dieser Stelle setzt die Erfindung an, deren Aufgabe es ist, eine Mutter derart auszubilden, dass ein unbeabsichtigtes Lösen wirksam vermieden ist.

Die Aufgabe wird gelöst durch eine Mutter mit einem zumindest einen Gewindegang aufweisenden Innengewinde, wobei der Gewindegang spiralförmig um eine Drehachse der Mutter ausgebildet ist und in Umfangsrichtung nacheinander angeordnete Schlitze aufweist, wobei zwischen den Schlitzen ein Innengewindezahn ausgebildet ist.

Die Erfindung geht von dem Gedanken aus, eine Mutter derart auszubilden, dass das Anziehdrehmoment nicht geändert werden muss, aber dennoch ein wirksamer Schutz gegenüber unbeabsichtigtem Lösen vorhanden ist. Dazu wird der Gewindegang des Innengewindes der Mutter mit Schlitzen versehen. Diese Schlitze führen zu einer regelmäßigen Unterbrechung der Übertragungskräfte des Innengewindes auf die Schraube. Zwischen den Schlitzen ist ein Innengewindezahn ausgebildet, der in Folge der Reibkräfte beim Anziehen der Mutter elastisch verformt wird. Diese geringe elastische Verformung, die in Umfangsrichtung erfolgt, ist gewollt und führt nicht zu einer nennenswerten Erhöhung des Anziehdrehmomentes. Die elastische Verformung erfolgt entgegengesetzt der Eindrehrichtung, da die Reibkräfte der Drehrichtung entgegen wirken.

Im Betrieb kann es in Folge von Vibrationen oder thermischen Beanspruchungen zu einer Lösekraft an der Mutter führen, die dazu führt, dass eine Drehbewegung entgegen der Anziehdrehrichtung erfolgt. Solch eine Lösedrehrichtung wäre unerwünscht. Der im Eindrehvorgang verbogene Innengewindezahn verhindert allerdings ein wirksames Lösen der Mutter. Der aufgrund der Reibkräfte verbogene Innengewindezahn würde beim Lösen in entgegengesetzter Richtung der Eindrehrichtung verbogen werden, was zu einer Verkeilung des Innengwindezahns mit dem Gegengewinde führt. Ein wirksames Lösen ist dadurch verhindert.

In den Unteransprüchen sind vorteilhafte Weiterbildungen angegeben.

So ist es vorteilhaft, wenn der Gewindegang eine Flankenhöhe h und der Innengwindezahn eine Innengewindezahnlänge z aufweist, wobei die Innengewindezahnlänge z 1% - 25% der Flankenhöhe h beträgt. Bei der konstruktiven Bestimmung der Höhe des Innengewindezahnes muss darauf geachtet werden, dass die auftretenden Kräfte nicht zu einer zu großen Verformung des Innengewindezahns führen, bei gleichbleibenden Übertragungskräften des Innengewindezahnes auf das Gegengewinde. Ein vergleichsweise langer und schmaler Innengewindezahn würde die Gefahr eines Risses mit sich ziehen. Daher ist sorgfältig abzuwägen, einen Innengewindezahn derart auszubilden, dass die Gefahr eines Abrisses minimiert ist. Um die Gefahr des Abrisses zu minimieren weist der Innengewindezahn eine Innengewindezahnlänge z auf, die 1% - 25% der Flankenhöhe h beträgt. Die Flankenhöhe h ist die in radialer Richtung der Drehachse ausgeprägte Länge des Gewindeganges.

In einer vorteilhaften Weiterbildung ist der Innengewindezahn gegen die Umfangsrichtung geneigt. Die Neigung des Innengewindezahns gegen die Umfangsrichtung führt zu einem Verkeilen des Innengewindezahns beim Lösen der Mutter. Durch diese Verkeilung wird das Lösungsdrehmoment der Mutter erhöht, was vorteilhaft ist, wenn die Mutter selbstsichernd ausgebildet sein soll. Die Neigung ist entgegen der Anziehrichtung ausgebildet. Das bedeutet, dass der Innengwindezahn gegen die Einziehdrehrichtung geneigt ist.

Vorteilhafterweise weist die Neigung Werte zwischen 60° und 89,5° auf. Die Neigung bezieht sich hierbei auf die Umfangsrichtung. Bei zu geringen Neigungswerten, die unter 4° liegen, wären die Reibkräfte zu gering, um ein ungewolltes Lösen zu vermeiden.
In einer vorteilhaften Weiterbildung wird der letzte Gewindegang geschlitzt ausgeführt.

In einer weiteren vorteilhaften Weiterbildung weist der Innengewindezahn in Umfangsrichtung gesehen, eine Innengewindezahnvorderseite und eine Innengewindezahnhinterseite auf. Dabei ist die Innengewindezahnvorderseite und die Innengewindezahnhinterseite im Wesentlichen parallel zueinander ausgebildet. Die elastische Verformbarkeit von geometrischen Körpern wird durch ihre geometrische Ausgestaltung wesentlich beeinflusst. Durch die parallel ausgeführten Seiten ist eine gute Verformbarkeit des Innengewindezahns gewährleistet. Die Übertragungskräfte des Innengewindezahns auf das Gegengewinde kann dadurch verbessert werden.

In einer weiteren vorteilhaften Weiterbildung weist der Innengewindezahn eine Innengewindzahnoberfläche auf, die im Wesentlichen senkrecht zur Innengewindezahnvorderseite oder Innengewindezahnhinterseite ausgebildet ist. Die senkrecht ausgeführte Innengewindezahnoberfläche führt zu einem größeren reibenden Kontakt zwischen dem Gegengewinde und dem Innengewindezahn. Die Innengewindezahnoberfläche und die Innengewindezahnvorderseite sind eckig zueinander ausgeführt, was dazu führt, dass beim Lösen der Mutter der eckig ausgeführte Innengewindezahn sich in das Gegengewinde einhakt und möglicherweise die Oberfläche des Gegengewindes abspant. Durch die 90° zueinander ausgebildeten Flächen des Innengewindezahns wird die Reibkraft erhöht. In einer vorteilhaften Weiterbildung ist die Innengewindezahnoberfläche im Wesentlichen parallel zur Umfangsrichtung ausgebildet. Dadurch ist die Herstellung der Mutter einfach, da bei einer vorhandenen Mutter mit einem Schneideverfahren lediglich ein Schlitz eingearbeitet werden muss. Eine weitere mechanische Bearbeitung des Innengewindezahns nach der Einfräsung der Schlitze ist im Grunde nicht erforderlich.

In einer vorteilhaften Weiterbildung ist der Innengewindezahn konusförmig ausgebildet. Durch die konusförmige Ausbildung des Innengewindezahns sind die elastischen Verformungskräfte verringert. Dadurch sind größere Reibungskräfte möglich. Darüber hinaus kann für die Mutter ein Material verwendet werden, das im Vergleich zu anderen Materialien spröder ist. Durch die geringere Neigung zur Verformbarkeit ist die Gefahr eines Bruches des Innengewindezahns vermieden.

In einer vorteilhaften Weiterbildung sind die Innengewindezähne der Mutter identisch zueinander ausgebildet. Das führt zu einer leichteren Herstellbarkeit, was zu geringeren Herstellkosten führt.

Ausführungsbeispiele der Erfindung werden nachfolgend anhand der Zeichnungen näher beschrieben. Diese sollen das Ausführungsbeispiel nicht maßstäblich darstellen, vielmehr ist die Zeichnung, wozu Erläuterungen dienen, in schematischer und/oder leicht versetzter Form ausgeführt. Im Hinblick auf Ergänzungen der aus den Zeichnungen unmittelbar erkennbaren Lehren wird auf den einschlägigen Stand der Technik verwiesen.

In den unterschiedlichen Figuren sind gleiche Teile stets mit demselben Bezugszeichen versehen, so dass diese in der Regel auch nur einmal beschrieben werden. Es zeigen:
- Figur 1: eine perspektivische Ansicht einer gemäß dem Stand der Technik bekannten Mutter;
- Figur 2: eine Draufsicht auf eine Mutter;
- Figur 3: eine Darstellung eines Gewindeganges;
- Figur 4: eine Schnittdarstellung einer Schraubverbindung im eingebauten Zustand;
- Figur 5: eine Darstellung eines Gewindezahnes;
- Figur 6: eine Darstellung eines Gewindezahnes;
- Figur 7: eine alternative Darstellung eines Gewindezahnes.

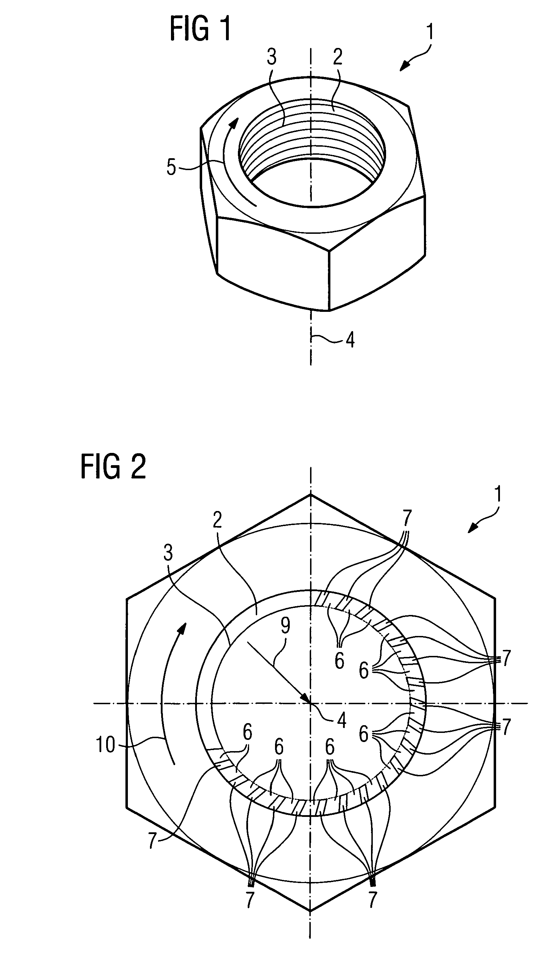

In der Figur 1 ist eine perspektivische Darstellung einer Mutter 1 zu sehen. Die Mutter 1 ist als Sechskant-Mutter ausgebildet und weist ein Innengewinde 2 auf. Das Innengewinde 2 weist einen Gewindegang auf, der spiralförmig um eine Drehachse 4 der Mutter 1 ausgebildet ist. Durch eine Drehung der Mutter 1 in eine Anziehdrehrichtung 10 wird die Mutter 1 auf eine Schraube mit einem Gegengewinde aufgeschraubt. Bei einem sog. Rechtsgewinde führt eine Drehung der Mutter 1 im Uhrzeigersinn zu einer Bewegung der Mutter 1 in Richtung des Schraubenkopfes.

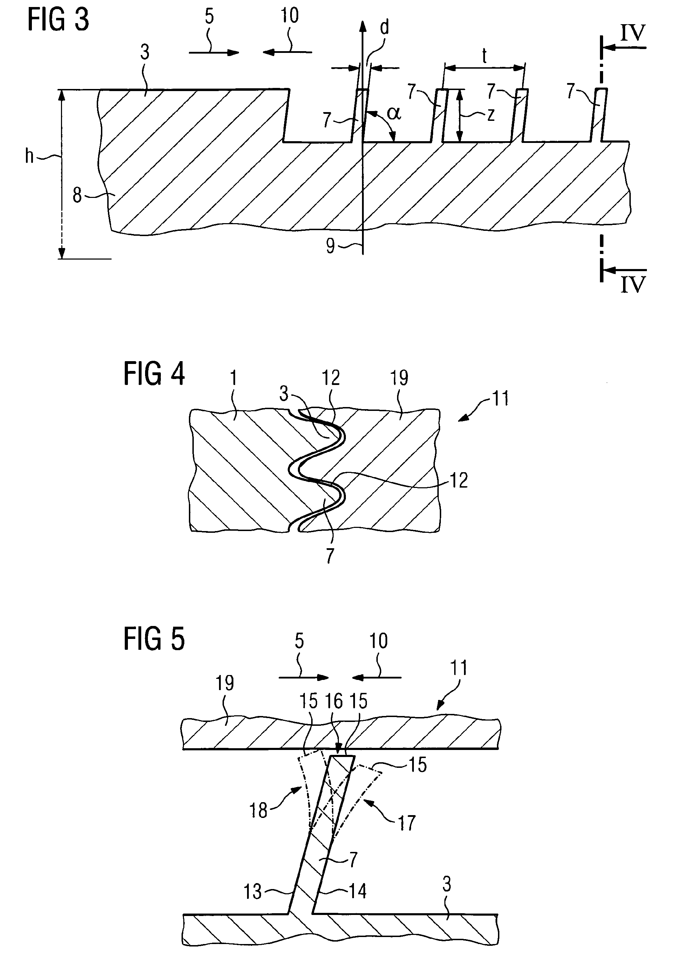

In der Figur 2 ist eine Draufsicht auf eine Mutter 1 zu sehen. In der in Figur 2 dargestellten Ansicht ist das sechskantige Profil der Mutter 1 zu sehen. Des Weiteren ist das Innengewinde 2 mit dem Innengewindegang 3 zu sehen. Der Gewindegang 3 ist in Anziehdrehrichtung 10 geschlitzt ausgeführt. Das bedeutet, dass der Gewindegang 3 an mehreren Stellen Schlitze 6 aufweist. Zwischen den Schlitzen 6 ist ein Innengewindezahn 7 ausgebildet. Diese Innengewindezähne 7 sind in Umfangsrichtung 5 verteilt. In der Figur 3 ist der Gewindegang 3 abgewickelt dargestellt. Der Gewindegang 3 umfasst eine Gewindeflanke 8. Die Gewindeflanke 8 weist eine Flankenhöhe h auf, die im Wesentlichen senkrecht zur Umfangsrichtung 5 ausgebildet ist. Der Innengewindezahn 7 weist eine Dicke d auf und ist mit dem Abstand t zueinander ausgebildet.

Der Innengewindezahn 7 ist gegenüber einer radialen Richtung 9, die zur Drehachse 4 hin zeigt, um einen Winkel α geneigt. Der Winkel α nimmt Werte zwischen 60° und 89,5° an.

Die Mutter 1 wird derart ausgeführt, dass ein Teil des letzten Gewindeganges 3 geschlitzt ausgeführt ist oder auch der ganze letzte Gewindegang oder auch mehrere Gewindegänge bis zu 70% der Gesamtgewindegangzahl. Des Weiteren ist die Flankenhöhe H und die Innengewindezahnlänge z derart gewählt, dass die Innengewindezahnlänge z 1% - 25% der Flankenhöhe h beträgt.

Die Neigung des Innengewindezahns 7 ist hierbei gegen die Anziehdrehrichtung 10 gerichtet, die bei einem Rechtsgewinde im Uhrzeigersinn zeigt.

In der Figur 4 ist eine Schraubverbindung dargestellt. Die Mutter 1 ist auf eine Schraube 11 geschraubt. Aufgrund der übertragenen Kräfte weist der Gewindegang 3 eine Fläche auf, über die die Kraft der Mutter 1 auf die Schraube 11 übertragen wird. Diese Fläche wird als tragende Flanke 12 bezeichnet und ist zwischen der Mutter 1 und der Schraube 11 angeordnet. Bei einem geschlitzten Gewindegang 3 und dadurch ausgebildeten Innengewindezahn 7 führt die aufgrund der Reibung an der tragenden Flanke 12 führenden Verkeilungen zu einer Sicherung der Mutter 1 gegenüber unbeabsichtigtem Lösen von der Schraube 11. Die Figur 4 ist eine Darstellung der in Figur 3 dargestellten Schnittebene AA. In der Figur 5 ist eine Darstellung eines Innengewindezahns 7 in verschiedenen Betriebszuständen zu sehen. Der Innengewindezahn 7 weist eine in Umfangsrichtung 5 gesehene Innengewindezahnvorderseite 13 eine Innengewindezahnhinterseite 14 sowie eine Innengewindezahnoberfläche 15 auf. Mit dem Bezugszeichen 10 ist ein Zustand 16 dargestellt, bei dem ein Kräftegleichgewicht und somit keine Biegung des Innengewindezahns 7 erfolgt. In diesem Zustand wäre die dargestellten geschlitzte Flanke der Mutter 1 kräftefrei.

Im Zustand 17 ist die Mutter 1 im eingebauten Zustand dargestellt. Der Innengewindezahn 7 wird hierbei elastisch verformt. Die elastische Verformung führt zu einer Biegung entgegengesetzt der Anziehdrehrichtung 10. Die elastische Verformung erfolgt aufgrund der Flankenreibung im verschraubten Zustand.

Im Zustand 18 ist die Mutter 1 während eines Lösevorgangs dargestellt. Der Innengewindezahn 7 verformt sich elastisch in Richtung der Anziehdrehrichtung 10 und blockiert einen Querschnitt. Der Innengewindezahn 7 stößt dabei mit der Innengewindezahnoberfläche 15 gegen ein Innengewinde 19 und verkeilt sich. Dadurch wird ein weiter steigendes, der Lösekraft entgegenwirkendes Moment erzeugt.

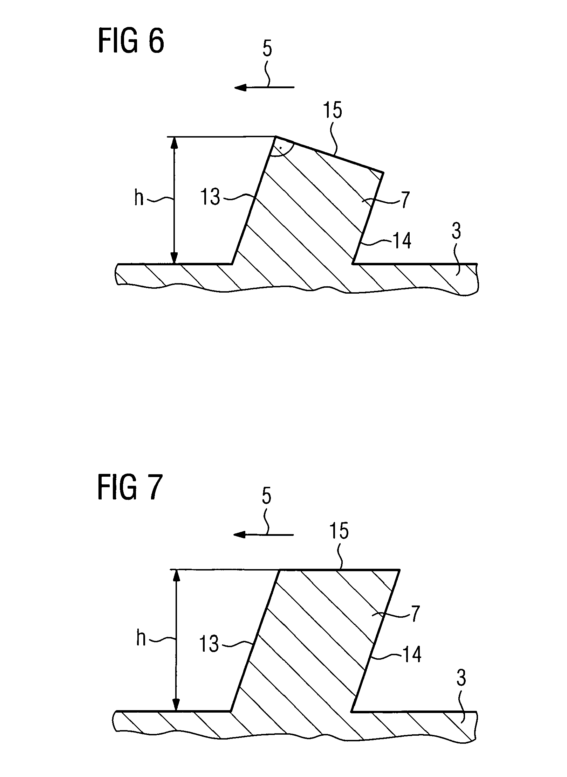

Der Abstand t der Innengewindezähne 7 ergibt sich aus fertigungstechnischen Überlegungen. Ebenso ist die notwendige Anzahl der Innengewindezähne 7 aus dem gewünschten Sicherungsdrehmoment zu ermitteln. In der Figur 6 ist eine Ausführungsform des Innengewindezahns 7 dargestellt. Die Innengewindevorderseite 13 ist hierbei im Wesentlichen senkrecht zur Innengewindeoberfläche 15 ausgebildet. Alternativ dazu kann die Innengewindeoberfläche 15 nahezu senkrecht zur Innengewindehinterseite 14 ausgebildet werden.

In der Figur 7 ist eine alternative Ausführungsform des Innengewindezahns 7 dargestellt. Aus fertigungstechnischen Gründen ist es einfacher, die Innengewindeoberfläche 15 parallel zur Umfangsrichtung 5 auszubilden.

Durch die erfindungsgemäße Mutter 1 ist eine einfache Montage, d.h. ohne zusätzliche und ohne aufwändige Sicherungselemente möglich. Darüber hinaus ist der Einsatz einer erfindungsgemäß ausgebildeten Mutter 1 in thermisch beanspruchten Bedingungen ohne Weiteres möglich. Des Weiteren zeigt die geschlitzte Form der Gewindeflanke 3, keinen nennenswerten Einfluss auf das Anzugsdrehmoment der Mutter 1. Ein weiterer Vorteil ist, dass das Losdrehmoment fertigungstechnisch über die Anzahl der Innengewindezähne 7 vorgegeben werden kann.

## Patentansprüche

1. Mutter (1) mit einem zumindest einen Gewindegang (3) aufweisenden Innengewinde (2),
wobei der Gewindegang (3) spiralförmig um eine Drehachse (4) der Mutter (1) ausgebildet ist und in Umfangsrichtung (5) nacheinander angeordnet Schlitze (6) aufweist,
**dadurch gekennzeichnet, dass**
zwischen den Schlitzen (6) ein Innengewindezahn (7) ausgebildet ist.

2. Mutter (1) nach Anspruch 1,
wobei der Gewindegang (3) eine Flankenhöhe (h) und der Innengewindezahn (7) eine Innengewindezahnlänge (z) aufweist,
wobei die Innengewindezahnlänge (z) 1% - 25% der Flankehöhe (h) beträgt.

3. Mutter (1) nach Anspruch 1 oder 2,
wobei der Innengewindezahn (7) gegen die Umfangsrichtung (5) geneigt ist.

4. Mutter (1) nach Anspruch 3,
wobei die Neigungswerte zwischen 60° und 89,5° annimmt.

5. Mutter (1) nach einem der Ansprüche 1 bis 4,
wobei der letzte Gewindegang (3) geschlitzt ist.

6. Mutter (1) nach einem der Ansprüche 1 bis 5,
wobei der Innengewindezahn (7) in Umfangsrichtung (5) gesehen, eine Innengewindezahnvorderseite (13) und eine Innengewindezahnhinterseite (14) aufweise,
wobei der Innengewindezahnvorderseite (13) im Wesentlichen parallel zur Innengewindezahnhinterseite (14) ausgebildet ist.

7. Mutter (1) nach Anspruch 6,
wobei der Innengewindezahn (7) eine Innengewindezahnoberfläche (15) aufweist, die im Wesentlichen senkrecht zur Innengewindezahnvorderseite (13) oder Innengewindezahnhinterseite (14) ausgebildet ist.

8. Mutter (1) nach Anspruch 6,
wobei der Innengewindezahn (7) eine Innengewindezahnoberfläche (15) aufweist, die im Wesentlichen parallel zur Umfangsrichtung (5) ausgebildet ist.

9. Mutter (1) nach einem der Ansprüche 1 bis 8,
wobei der Innengewindezahn (7) konusförmig ausgebildet ist.

10. Mutter (1) nach einem der Ansprüche 1 bis 9,
wobei die Innengewindezähne (7) identisch zueinander ausgebildet sind.
